# EUROPEAN PATENT APPLICATION

(11) **EP 4 120 491 A1**
(43) Date of publication of application: **18.01.2023**
(21) Application number: 21767074.4
(22) Date of filing: 17.02.2021
(51) Int. Cl.: H02G 1/12, B26D 3/00, B26D 5/08

(54) **CONDUCTING WIRE INSULATING COATING PEELING DEVICE, WINDING DEVICE EQUIPPED WITH SAME, AND CONDUCTING WIRE WINDING METHOD**

(30) Priority: 09.03.2020 JP 2020039627
(71) Applicant: NITTOKU Co., Ltd., Saitama-city, Saitama 3300841 (JP)
(72) Inventor: WATANABE, Masashi, Fukushima-shi, Fukushima 960-1393 (JP); NOJI, Kaoru, Fukushima-shi, Fukushima 960-1393 (JP)
(74) Representative: Grünecker Patent- und Rechtsanwälte PartG mbB
(86) International application number: PCT/JP2021/005837
(87) International publication number: WO 2021/182039

(57) **Abstract**

As electrical-conductor-wire insulating-layer stripping device (10) is provided with: a downstream-end side stripper (11) configured to strip an insulating layer of the electrical conductor wire (8) by moving cutters (14) towards the downstream end side of the electrical conductor wire (8); an upstream-end side stripper (21) configured to strip the insulating layer of the electrical conductor wire (8) by moving cutters (24) towards the upstream end side of the electrical conductor wire (8); and a stripper moving means (31) configured to move either one or both of the downstream-end side stripper (11) and the upstream-end side stripper (21) along the longitudinal direction of the electrical conductor wire (8).

## Description

### TECHNICAL FIELD

The present invention relates to an electrical-conductor-wire insulating-layer stripping device, a wire winding device provided with the same, and an electrical-conductor-wire winding method.

### BACKGROUND ART

Conventionally, an electrical conductor wire used for electronic components, etc. has an insulating layer formed on its outer surface. When the electrical conductor wire of this type with the insulating layer is soldered or brazed to a terminal or a lead wire, the soldering or the brazing is performed after stripping the insulating layer every times. As a method for efficiently performing a stripping operation of the insulating layer, there is a known method in which a device for stripping the insulating layer is provided on a supply line of the electrical conductor wire, and the insulating layer of the electrical conductor wire is stripped during the supply at a required timing.

As such stripping devices, there is a known device including a rotating member that is rotationally driven by a motor, a rocking arms that is pivotably supported to the rotating member so as to be freely swingable by a pin, weights respectively provided on one end sides of the rocking arms, cutters and friction members provided on other end sides of the rocking arms, and biasing means that biases the rocking arms in the direction in which the cutters become a standby state (for example, see JPH10-322833A).

With this stripping device, it is possible to rotate the rotating member by rotation of the motor, generate the centrifugal force on the weights, cause the rocking arms to swing against a biasing force exerted by the biasing means, cause the cutters provided on the other ends of the arms to bite into the insulating layer of the electrical conductor wire, and at this state, move the cutters in the longitudinal direction of the electrical conductor wire for a predetermined length, thereby removing the insulating layer for the predetermined length corresponding to the amount of movement of the cutters.

### SUMMARY OF INVENTION

However, with the stripping device in which the insulating layer on the outer surface of the electrical conductor wire is removed by moving the cutters in the longitudinal direction of the electrical conductor wire in a state in which the cutters are pressed against the outer surface of the electrical conductor wire, there is a drawback in that there are differences between the finish at a stripping-start part where the cutters are initially brought into contact and the finish at a stripping-finish part where the cutters are separated from the electrical conductor wire after the cutters have been moved for a predetermined length.

Specifically, although the insulating layer of the electrical conductor wire is stripped by moving the cutters brought into contact with the outer surface of the electrical conductor wire in the longitudinal direction, in the stripping-start part where the cutters are initially brought into contact, the insulating layer that has been stripped is reliably removed by the moving cutters, and therefore, the insulating layer will not remain in the stripping-start part.

However, a part of the insulating layer that has been stripped is tightly adhered to the cutters and moves together with the cutters, and so, there is a risk in that, in the stripping-finish part where the cutters are to be separated away from the electrical conductor wire, the part of the stripped insulating layer that has moved together with the cutters remains as a stripping on the surface of the electrical conductor wire.

In addition, the stripping device as described above is also used in a wire winding device that winds the electrical conductor wire around a wire-wound member. The insulating layer of the electrical conductor wire wound around the wire-wound member is stripped by the stripping device at both of a winding-head part on the downstream end side and a winding-tail part of the upstream end side, and then, the electrical conductor wire is soldered to the terminal provided on the wire-wound member or the lead wire.

However, in the wire winding device using the conventional stripping device, because the direction of the removal of the insulating layer by the cutters is set in advance to the direction from the upstream end side to the downstream end side or to the direction from the downstream end side to the upstream end side of the electrical conductor wire, there is a risk in that the stripping remains at either one of the winding-head part and the winding-tail part of the electrical conductor wire wound around the wire-wound member. Because the stripping formed of the insulating layer has an insulating property, if the stripping is left on the stripped part to be soldered to the terminal or the lead wire, there is a risk in that a problem such as a conduction failure, etc. is caused.

In order to avoid such a phenomenon, conventionally, a worker is required to rub and remove the stripping by pressing a felt, etc. to the electrical conductor wire when the stripping is formed; however, the number of man hours of the worker is increased by such an operation.

An object of the present invention is to provide electrical-conductor-wire insulating-layer stripping device capable of changing the side on which the stripping is formed.

In addition, another object of the present invention is to provide a wire winding device and a winding method in which the stripping is not left at a stripped portion of an electrical conductor wire.

According to one aspect of the present invention, an electrical-conductor-wire insulating-layer stripping device configured to strip an insulating layer of an electrical conductor wire, the electrical-conductor-wire insulating-layer stripping device includes: a first stripper configured to strip the insulating layer of the electrical conductor wire by moving a first cutter towards a downstream end side of the electrical conductor wire, the first cutter being pressed against a periphery of the electrical conductor wire; a second stripper provided adjacent to the first stripper, the second stripper being configured to strip the insulating layer of the electrical conductor wire by moving a second cutter towards a upstream end side of the electrical conductor wire, and the second cutter being pressed against the periphery of the electrical conductor wire; and a stripper moving means configured to move either one or both of the first and second strippers along a longitudinal direction of the electrical conductor wire.

According to another aspect of the present invention, a wire winding device includes: an electrical-conductor-wire insulating-layer stripping device; a wire-rod delivering means configured to deliver the electrical conductor wire to the electrical-conductor-wire insulating-layer stripping device at a predetermined tension; and a wire winding means configured to wind the electrical conductor wire that has passed the electrical-conductor-wire insulating-layer stripping device around the wire-wound member.

According to another aspect of the present invention, an electrical-conductor-wire winding method for winding an electrical conductor wire around a wire-wound member, the electrical-conductor-wire winding method includes: a winding-head stripping step of forming a winding-head stripped portion by stripping an insulating layer of the electrical conductor wire by moving a first cutter towards a downstream end side of the electrical conductor wire, the insulating layer being stripped for a predetermined length, a downstream end of the electrical conductor wire being locked to a locking part, and the first cutter being pressed against a periphery of the electrical conductor wire; a winding-head anchoring step of anchoring the winding-head stripped portion around a winding-head connector portion of the wire-wound member; a winding-head cutting step of cutting the electrical conductor wire extending between the winding-head connector portion and the locking part, the electrical conductor wire being cut at a vicinity of the winding-head connector portion; a wire winding step of winding the electrical conductor wire following the winding-head stripped portion around the wire-wound member; a winding-tail stripping step of forming a winding-tail stripped portion by stripping the insulating layer of the electrical conductor wire in a winding-tail part by moving a second cutter towards a upstream end side of the electrical conductor wire, the insulating layer being stripped for a predetermined length, and the second cutter being pressed against the periphery of the electrical conductor wire; a winding-tail anchoring step of anchoring the winding-tail stripped portion around a winding-tail connector portion of the wire-wound member; a temporary locking step of locking the electrical conductor wire to the locking part, the electrical conductor extending towards the upstream end side of the winding-tail connector portion; and a winding-tail cutting step of cutting the electrical conductor wire extending between the winding-tail connector portion and the locking part, the electrical conductor wire being cut at a vicinity of the winding-tail connector portion.

### BRIEF DESCRIPTION OF DRAWINGS

FIG. 1 is a front view showing an electrical-conductor-wire insulating-layer stripping device according to the present invention embodiment.
FIG. 2 is a sectional view taken along a line A-A in FIG. 1.
FIG. 3 is a diagram corresponding to FIG. 2 showing a state in which a rotating member is rotated.
FIG. 4 is a sectional view taken along a line B-B in FIG. 1.
FIG. 5 is a top view showing the wire winding device provided with a stripping device.
FIG. 6 is a front sectional view taken along a line C-C in FIG. 5 showing the wire winding device.
FIG. 7 is a sectional view taken along a line D-D in FIG. 5.
FIG. 8A is a diagram showing a course of a stripping of an insulating layer using a downstream-end side stripper.
FIG. 8B is a diagram showing, subsequent to FIG. 8A, the course of the stripping of the insulating layer using the downstream-end side stripper.
FIG. 8C is a diagram showing, subsequent to FIG. 8B, the course of the stripping of the insulating layer using the downstream-end side stripper.
FIG. 9A is a diagram showing a course of a winding of an electrical conductor wire around a wire-wound member by the wire winding device.
FIG. 9B is a diagram showing, subsequent to FIG. 9A, the course of the winding of the electrical conductor wire around the wire-wound member by the wire winding device.
FIG. 9C is a diagram showing, subsequent to FIG. 9B, the course of the winding of the electrical conductor wire around the wire-wound member by the wire winding device.
FIG. 10A is a diagram showing the course of the stripping of the insulating layer using an upstream-end side stripper.
FIG. 10B is a diagram showing, subsequent to FIG. 10A, the course of the stripping of the insulating layer using the upstream-end side stripper.
FIG. 10C is a diagram showing, subsequent to FIG. 10B, the course of the stripping of the insulating layer using the upstream-end side stripper.
FIG. 11A is a diagram showing a step after the electrical conductor wire has been wound around the wire-wound member by the wire winding device.
FIG. 11B is a diagram showing, subsequent to FIG. 11A, the step after the electrical conductor wire has been wound around the wire-wound member by the wire winding device.
FIG. 11C is a diagram showing, subsequent to FIG. 11B, the step after the electrical conductor wire has been wound around the wire-wound member by the wire winding device.
FIG. 11D is a diagram showing, subsequent to FIG. 11C, the step after the electrical conductor wire has been wound around the wire-wound member by the wire winding device.

### DESCRIPTION OF EMBODIMENT

An embodiment of the present invention will be described below with reference to the drawings.

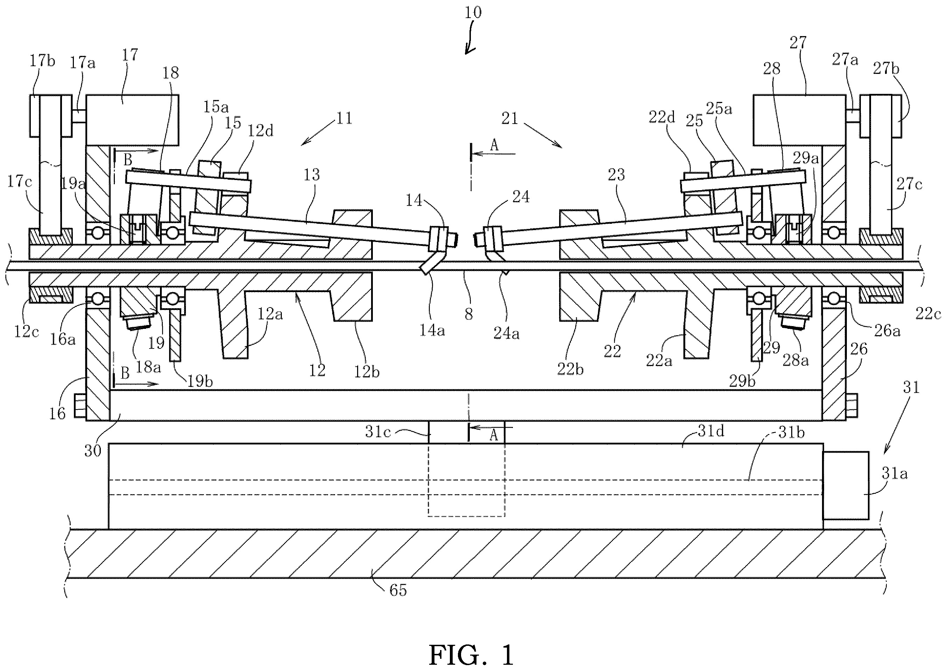

An electrical-conductor-wire insulating-layer stripping device 10 according to this embodiment is shown in FIG. 1. The electrical-conductor-wire insulating-layer stripping device 10 (hereinafter, referred to as "the stripping device 10") is provided with: a downstream-end side stripper 11 serving as a first stripper and an upstream-end side stripper 21 serving as a second stripper, both having the mutually symmetrical configuration; and a stripper moving means 31 that moves either one or both of the downstream-end side stripper 11 and the upstream-end side stripper 21 along the longitudinal direction of an electrical conductor wire 8.

The downstream-end side stripper 11 has a rotating member 12 serving as a first rotating member that is provided so as to be rotatable about the electrical conductor wire 8. The rotating member 12 is a tubular body, and an insertion hole, through which the electrical conductor wire 8 can be inserted, is formed so as to penetrate through the rotating member 12. At substantially the central portion of the rotating member 12 in the longitudinal direction, a large-diameter flange 12a having a relatively large outer diameter is formed. In addition, at a portion of the rotating member 12 on the upstream-end side stripper 21 side, a small-diameter flange 12b having a smaller diameter than the large-diameter flange 12a is formed such that a predetermined clearance is formed with the large-diameter flange 12a and so as to be arranged in substantially parallel with the large-diameter flange 12a.

Both flanges 12a and 12b that are formed integrally with the rotating member 12 are provided with a plurality of cutter shafts 13 each serving as a first cutter shaft so as to bridge over the both flanges 12a and 12b. The plurality of cutter shafts 13 are respectively inserted into holes formed in the both flanges 12a and 12b so as to penetrate through the both flanges 12a and 12b in the longitudinal direction of the electrical conductor wire 8. The plurality of cutter shafts 13 are supported by the rotating member 12 so as to be rotatable about its axial center.

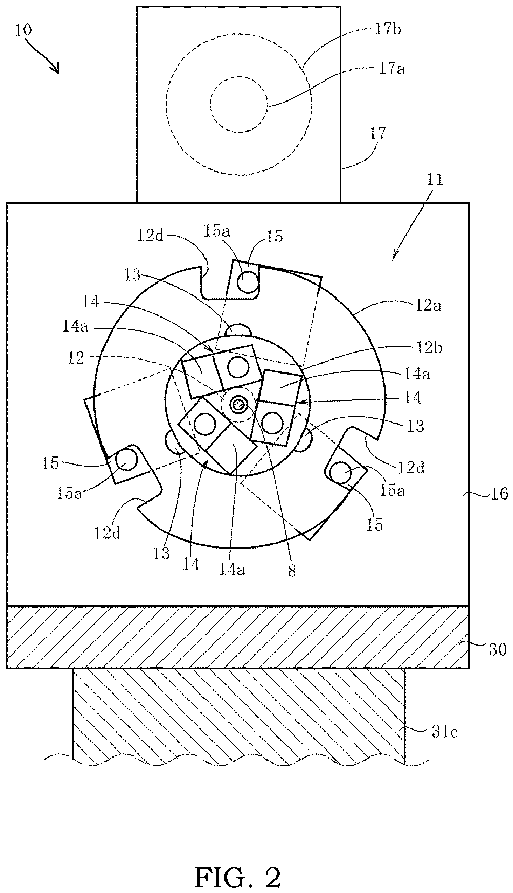

As shown in FIGs. 2 to 4, three cutter shafts 13 are arranged at intervals of 120° centered at a rotation axis of the rotating member 12. The plurality of cutter shafts 13 are provided so as to extend along the longitudinal direction of the rotating member 12 and are arranged at the equal intervals centered at the center axis of the rotating member 12. In addition, as shown in FIG. 1, the plurality of cutter shafts 13 are provided so as to be inclined with respect to the rotating member 12 such that the mounting radius thereof becomes larger towards the large-diameter flange 12a side from the small-diameter flange 12b side. In other words, the cutter shafts 13 are provided so as to be inclined with respect to the extending direction of the electrical conductor wire 8 such that the front end sides of the cutter shafts 13 where cutters 14 (which will be described later) are provided are positioned closer to the electrical conductor wire 8 than the rear end sides of the cutter shafts 13 where weights 15 (which will be described later) are provided.

As shown in FIGs. 1 to 3, on front end portions of the plurality of cutter shafts 13 that are end portions on the small-diameter flange 12b side, the cutters 14 each serving as a first cutter are respectively fixed so as to surround the electrical conductor wire 8. The cutters 14 are configured so as to, in response to the revolution of the cutter shafts 13, be able to come into contact with and move away from the electrical conductor wire 8 extending out from an end edge of the rotating member 12 on the small-diameter flange 12b side.

As shown in FIG. 1, the rotating member 12 provided with the plurality of cutter shafts 13 is rotatably supported by a support plate 16 at the end portion on the large-diameter flange 12a side via a bearing 16a. A motor 17 that is a driving device is attached to the support plate 16 such that its rotation axis 17a extends in parallel with the rotating member 12. In addition, a pulley 12c is fixed to the end portion of the rotating member 12 on the opposite side from the large-diameter flange 12a such that the support plate 16 is positioned between the pulley 12c and the large-diameter flange 12a. Also, a pulley 17b is provided on the rotation axis 17a of the motor 17, and a belt 17c is suspended over the pulley 17b and the pulley 12c. Therefore, the rotational movement of the rotation axis 17a of the motor 17 is transmitted to the rotating member 12 via the belt 17c. As described above, the rotating member 12 is rotationally driven by the motor 17.

As the rotating member 12 is rotationally driven and the respective flanges 12a and 12b are rotated together with the rotating member 12 about the electrical conductor wire 8 as the center, the plurality of cutter shafts 13 are also revolved about and around the electrical conductor wire 8 together with the respective flanges 12a and 12b.

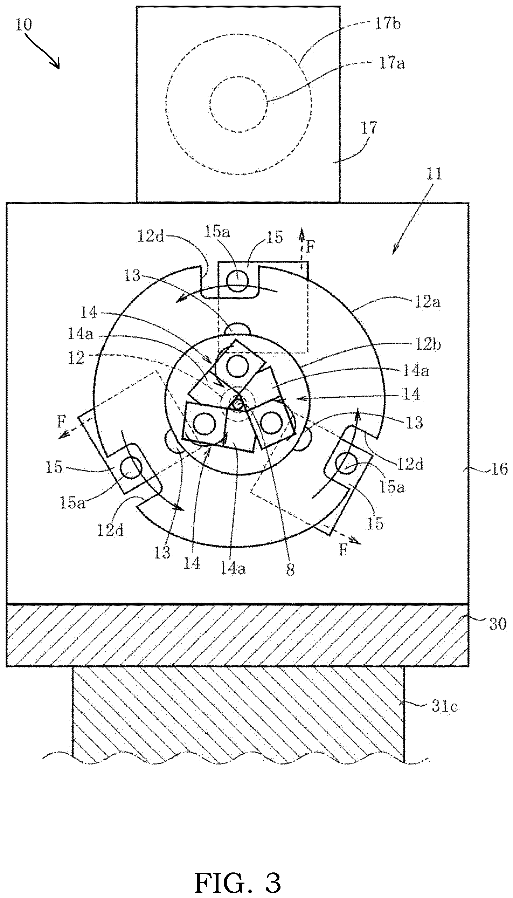

As shown in FIGs. 1 to 3, the weights 15 each serving as a first weight are respectively provided on rear end portions of the respective cutter shafts 13 that are end portions on the large-diameter flange 12a side. Each of the weights 15 is fixed in a state in which its center of the gravity is decentered in the circumferential direction of the large-diameter flange 12a with respect to the axial center of the cutter shaft 13. Therefore, as shown in FIG. 3, as the plurality of cutter shafts 13 are revolved about the electrical conductor wire 8 as the center, the centrifugal force F acts on the weights 15 provided on the rear ends of the cutter shafts 13 as shown by broken arrows, and then, parts of the weights 15 remote from the cutter shafts 13 move radially outward. As the cutter shafts 13 are rotated by this displacement of the weights 15, blade portions 14a of the cutters 14 provided on the front end portions of the cutter shafts 13 approach and come into contact with the electrical conductor wire 8.

As shown in FIG. 1, the cutters 14 are set so as to come into contact at an angle with a side surface of the electrical conductor wire 8 that is inserted through the rotating member 12 and extends out from the end edge of the rotating member 12 on the small-diameter flange 12b side. Therefore, by moving the blade portions 14a in contact with the electrical conductor wire 8 along the electrical conductor wire 8 in the direction towards the large-diameter flange 12a while rotating the cutter shafts 13 together with the rotating member 12 about the electrical conductor wire 8 as the center, the blade portions 14a of the cutters 14 in contact with the electrical conductor wire 8 strip an insulating layer of the electrical conductor wire 8 in a spiral shape.

In addition, the downstream-end side stripper 11 is provided with flat springs 18 that respectively bias the cutter shafts 13 in the direction in which the cutters 14 are moved away from the electrical conductor wire 8 against the centrifugal force F acting on the weights 15. On the support plate 16 side of the rotating member 12 from the large-diameter flange 12a, an attachment ring 19 for fixing the flat springs 18 to the rotating member 12 is attached with an attachment screw 19a. Base ends of the flat springs 18 are attached to the attachment ring 19 by fixing screws 18a.

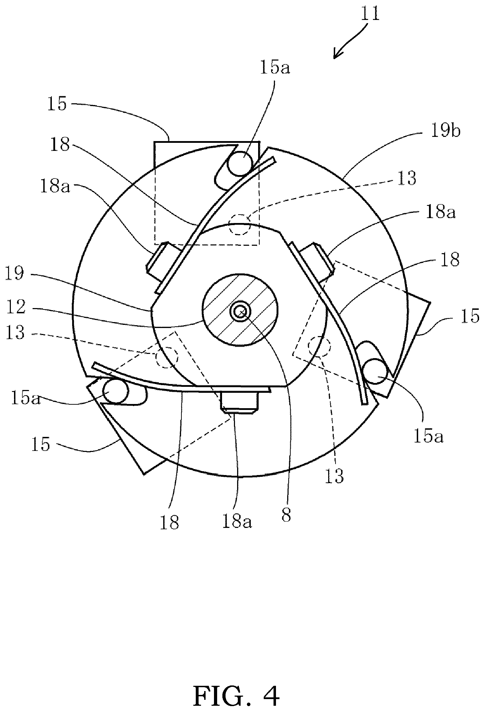

On the other hand, the weights 15 are respectively provided with pins 15a so as to penetrate therethrough in parallel with the cutter shafts 13. The pins 15a are attached to the weights 15 at the outer side of the cutter shafts 13 in the radial direction of the rotating member 12. As shown in FIG. 4, the flat springs 18 are attached to the attachment ring 19 in a bent state at base end portions thereof such that tip end portions or middle portions thereof respectively come into contact with the pins 15a.

An elastic force exerted by the flat springs 18 the tip end portions or the middle portions of which are respectively in contact with the pins 15a in the bent state acts so as to bias the weights 15 via the pins 15a in the direction opposite from the direction in which the weights 15 are displaced by the centrifugal force. A reference numeral 19b in FIGs. 1 and 4 shows a disc 19b provided with guide grooves for guiding the pins 15a, and the disc 19b is provided for matching amounts of the displacement of the respective weights 15 in the radial direction of the rotating member 12, in other words, for matching amounts of rotation of the plurality of cutter shafts 13.

By providing the flat springs 18 as described above, when the rotation of the rotating member 12 is stopped, the cutter shafts 13 that have being rotated in response to the centrifugal force is now rotated in the opposite direction by the elastic force exerted by the flat springs 18, and then, as shown in FIG. 2, an initial state in which the blade portions 14a of the cutters 14 are separated away from the electrical conductor wire 8 is established. In this state, the electrical conductor wire 8 can be moved in the longitudinal direction without stripping the insulating layer of the electrical conductor wire 8. A reference numeral 12d in FIGs. 2 and 3 shows cut outs 12d for restricting the movement of the pins 15a, and the amount of the rotation of the cutter shafts 13 by the flat springs 18 in the opposite direction is restricted as the pins 15a are respectively brought into contact with the cut outs 12d when the blade portions 14a are separated away from the electrical conductor wire 8.

The downstream-end side stripper 11 is configured as described above, and as shown in FIG. 1, the upstream-end side stripper 21 has a symmetrical configuration with the downstream-end side stripper 11 and is provided adjacent to the downstream-end side stripper 11. The upstream-end side stripper 21 has the symmetrical configuration with the downstream-end side stripper 11 and the configurations of respective parts thereof are the same as those of the downstream-end side stripper 11, and therefore, description of the respective parts of the upstream-end side stripper 21 is omitted. The reference numerals of the members of the upstream-end side stripper 21 corresponding to those of the downstream-end side stripper 11 are shown by adding ten to the reference numerals of the corresponding members of the downstream-end side stripper 11, and for example, a rotating member of the upstream-end side stripper 21 has a reference numeral of 22.

The upstream-end side stripper 21 is arranged in a state in which cutters 24, each serving as a second cutter, provided on front ends of cutter shafts 23, each serving as a second cutter shaft, face the cutters 14 of the downstream-end side stripper 11, and the respective strippers 11 and 21 are attached on a square base plate 30 via the respective support plates 16 and 26 such that the rotation centers of the respective rotating members 12 and 22 are arranged coaxial. As described above, the upstream-end side stripper 21 is arranged adjacent to the downstream-end side stripper 11.

The stripper moving means 31 is provided for moving both of the downstream-end side stripper 11 and the upstream-end side stripper 21 along the longitudinal direction of the electrical conductor wire 8. The stripper moving means 31 is provided with a housing 31d having an elongated box shape extending in the longitudinal direction of the respective rotating members 12 and 22 that are provided coaxially, a ball screw 31b that is provided in the housing 31d so as to extend along the longitudinal direction and that is rotationally driven by a servomotor 31a, and a follower 31c that is screwed to the ball screw 31b and that moves along the ball screw 31b.

The base plate 30 to which the strippers 11 and 21 are attached is attached to the follower 31c such that the rotation centers of the respective rotating members 12 and 22 and the rotation center of the ball screw 31b are in parallel with each other.

As the servomotor 31a is driven and the ball screw 31b is rotated in accordance with instructions from a controller (not shown), the follower 31c screwed to the ball screw 31b is moved in the longitudinal direction of the housing 31d together with the base plate 30 and the strippers 11 and 21. With such a configuration, it is possible to move the respective strippers 11 and 21 along the longitudinal direction of the electrical conductor wire 8 in a state in which the electrical conductor wire 8 is inserted through the respective rotating members 12 and 22.

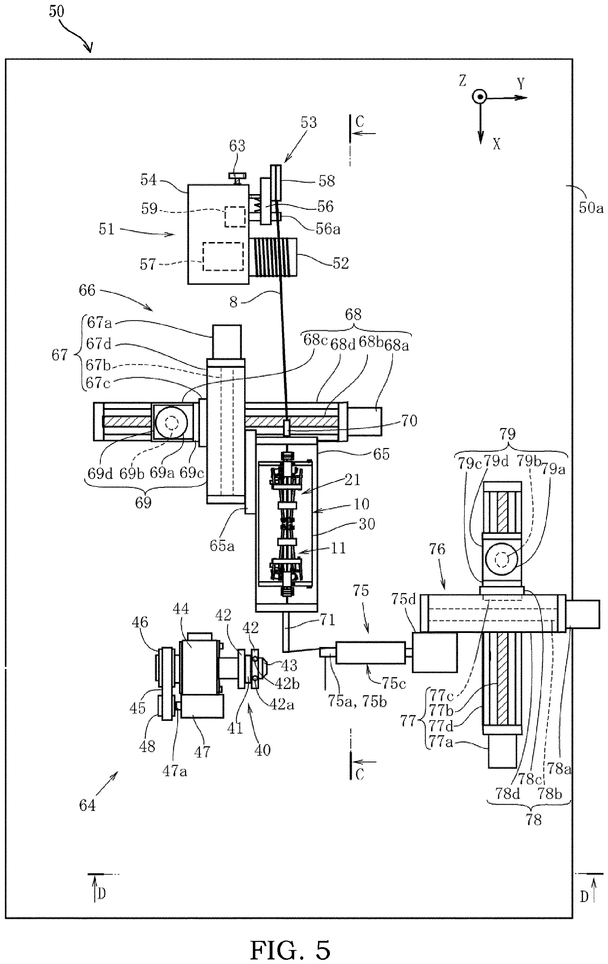

Next, the wire winding device 50 provided with the stripping device 10 having the above-described configuration will be described with reference to FIGs. 5 to 7. In the following, three axes X, Y, and Z that are mutually orthogonal are set, and the configuration of the wire winding device 50 will be described by stating that the X axis extends in the substantially horizontal front-rear direction, the Y axis extends in the substantially horizontal transverse direction, and the Z axis extends in the substantially vertical direction.

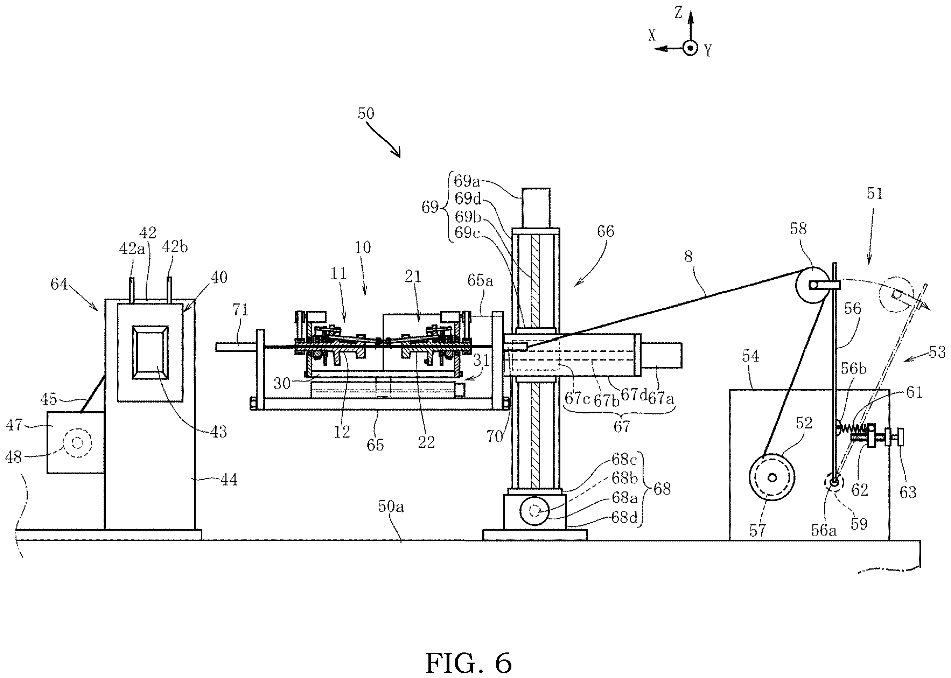

The wire winding device 50 is provided with a wire rod delivering means 51 that delivers the electrical conductor wire 8 to the stripping device 10 at a predetermined tension. As shown in FIG. 6, the electrical conductor wire 8 is stored by being wound on a spool 52. The electrical conductor wire 8 unwound from the spool 52 is guided towards the stripping device 10, and on its way thereto, a tension device 53 that applies a constant tension to the electrical conductor wire 8 is provided.

The tension device 53 is capable of applying the tension to the electrical conductor wire 8 to be delivered and pulling back the electrical conductor wire 8, and the tension device 53 is provided with a casing 54 that is provided on a mounting 50a and a tension bar 56 that is provided so as to extend in the direction perpendicular to a side surface of the casing 54.

The spool 52, on which the electrical conductor wire 8 is wound and stored, is provided on the side surface of the casing 54, and a delivery control motor 57 that rotates the spool 52 to deliver the electrical conductor wire 8 is provided in the casing 54. In addition, on a tip end of the tension bar 56, a guide pulley 58 to which the electrical conductor wire 8 delivered from the spool 52 is guided is provided, and the electrical conductor wire 8 delivered from the spool 52 is sent out to the stripping device 10 via the guide pulley 58.

The tension bar 56 is provided so as to be turnable in an X-Z plane about a turning shaft 56a, as a support point, positioned at its base end, in other words, the tension bar 56 is turnable in a plane parallel to the side surface of the casing 54 on which the tension bar 56 is provided. The turning angle of the turning shaft 56a is detected by a potentiometer 59 serving as a turning angle detection means that is accommodated in the casing 54 and attached to the turning shaft 56a. A detection output from the potentiometer 59 is input to the controller (not shown), and a control signal is output to the delivery control motor 57 from the controller in accordance with the detection output from the potentiometer 59.

In addition, the one end of a spring 61 serving as biasing means that applies a biasing force in the turning direction of the tension bar 56 is attached via a mounting bracket 56b at a predetermined position between the turning shaft 56a of the tension bar 56 and the guide pulley 58. The other end of the spring 61 is fixed to a moving member 62 that is provided on the casing 54. Thus, the spring 61 biases the tension bar 56 by the elastic force generated in accordance with the turning angle of the tension bar 56. The moving member 62 is screwed to a tension adjusting screw 6 and can be moved in the X axis direction as the tension adjusting screw 63 is rotated. As described above, by changing the fixed position of the other end the spring 61 and by adjusting the biasing force applied by the spring 61 to the tension bar 56, it is possible to adjust the tension applied by the tension bar 56 to the electrical conductor wire 8.

The controller (not shown) controls the delivery control motor 57 such that the turning angle detected by the potentiometer 59 serving as the turning angle detection means becomes a predetermined angle. In other words, in the tension device 53, by rotating the spool 52 such that the turning angle of the tension bar 56 becomes the predetermined angle, a predetermined amount of the electrical conductor wire 8 is delivered while the tension applied by the spring 61 to the electrical conductor wire 8 via the tension bar 56 is made constant. The electrical conductor wire 8 to which the tension at a predetermined level is applied is delivered to the stripping device 10 while being tensioned.

The wire winding device 50 is provided with a nozzle moving means 66 that moves a support plate 65 on which the stripping device 10 is provided in the three axial directions.

As shown in FIGs. 5 and 6, the nozzle moving means 66 is configured by combining X-axis, Y-axis, and Z-axis direction expansion/contraction actuators 67 to 69. The respective expansion/contraction actuators 67 to 69 forming the nozzle moving means 66 respectively have: elongated box-shaped housings 67d to 69d; ball screws 67b to 69b that are provided in the housings 67d to 69d so as to extend in the longitudinal direction and that are rotationally driven by servomotors 67a to 69a; and followers 67c to 69c that are screwed to the ball screws 67b to 69b and moved along the ball screws 67b to 69b.

The nozzle moving means 66 is configured so as to be able to move the support plate 65 in the three axial directions with respect to the mounting 50a, and in order to make the support plate 65 movable in the X axis direction, the support plate 65 is attached to the housing 67d of the X-axis direction expansion/contraction actuator 67 via a perpendicular plate 65a. In addition, in order to make the support plate 65 movable together with the X-axis direction expansion/ contraction actuator 67 in the Z axis direction, the follower 67c of the X-axis direction expansion/contraction actuator 67 is attached to the follower 69c of the Z-axis direction expansion/contraction actuator 69.

In addition, in order to make the support plate 65 movable together with the X axis and Z-axis direction expansion/ contraction actuators 67 and 69 in the Y axis direction, the housing 69d of the Z-axis direction expansion/contraction actuator 69 is attached to the follower 68c of the Y-axis direction expansion/contraction actuator 68. The housing 68d of the Y-axis direction expansion/ contraction actuator 68 is fixed to the mounting 50a so as to be aligned along the Y axis direction. The respective servomotors 67a to 69a of the respective expansion/contraction actuators 67 to 69 are connected to the controller (not shown) for controlling them.

The housing 31d of the stripper moving means 31 of the stripping device 10 is mounted on the support plate 65 so as to be aligned along the X axis direction. In addition, an upstream-end-side nozzle 70 and a wire rod nozzle 71 are provided on both ends of the support plate 65 in the X axis direction such that the stripping device 10 are positioned therebetween and such that predetermined clearances are respectively formed with the stripping device 10.

The upstream-end-side nozzle 70 guides the electrical conductor wire 8 to which the constant tension is applied by the tension device 53 to the stripping device 10 and is provided coaxially with the rotating member 22 serving as a second rotating member of the upstream-end side stripper 21. On the other hand, the electrical conductor wire 8 that has passed through the stripping device 10 is inserted through the wire rod nozzle 71, and the wire rod nozzle 71 is provided coaxially with the rotating member 12 of the downstream-end side stripper 11.

In addition, the wire winding device 50 is provided with a wire winding means 64 that winds the electrical conductor wire 8 that has passed through the stripping device 10 around a wire-wound member 40. As shown in FIGs. 5 and 6, the wire winding means 64 has the wire rod nozzle 71 through which the electrical conductor wire 8 that has passed through the stripping device 10 is inserted and the nozzle moving means 66 that moves the support plate 65, on which the wire rod nozzle 71 is provided, in the three axial directions.

One having: a winding body portion 41 around which the electrical conductor wire 8 is wound; a pair of flanges 42 that are provided on both sides of the winding body portion 41 so as to limit a winding width of the electrical conductor wire 8 on the winding body portion 41; and the pair of pins 42a and 42b that are provided on one of the flanges 42 for forming a winding-head connector portion and a winding-tail connector portion is used as the wire-wound member 40. The wire winding means 64 that winds the electrical conductor wire 8 around the wire-wound member 40 having the above-described shape rotates the wire-wound member 40 and winds the electrical conductor wire 8 delivered from the nozzle 71 around the winding body portion 41 of the wire-wound member 40. The shape of the above-described wire-wound member 40 is merely an example, and the shape of the wire-wound member 40 is not limited thereto.

The wire winding means 64 has a rotator 43 that rotates the wire-wound member 40. The rotator 43 has a shape that allows it to be inserted into the inside of the winding body portion 41 of the wire-wound member 40, and the wire-wound member 40 is formed so as to be detachable relative to the rotator 43. The rotator 43 is supported by a support pillar 44 erected on the mounting 50a so as to be freely rotatable in a state in which both end portions thereof in the rotation axis direction are projected from the support pillar 44.

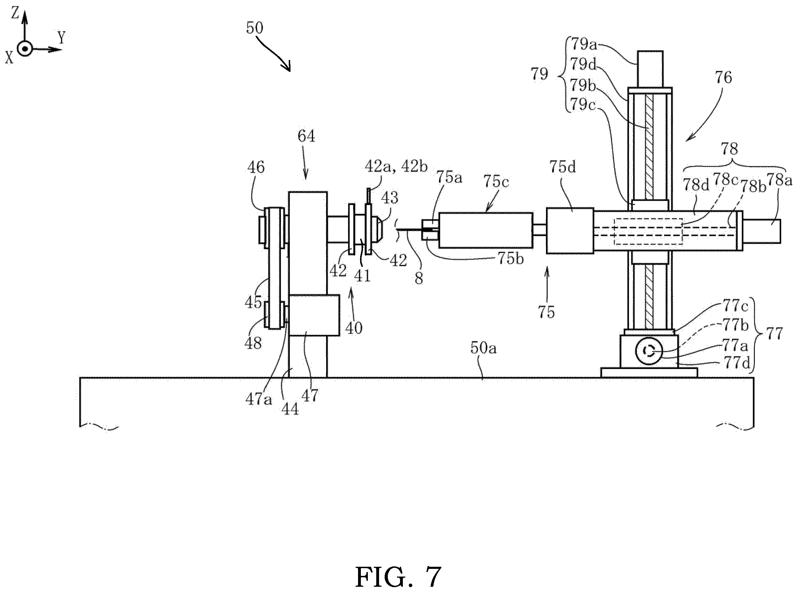

As shown in FIGs. 5 and 7, a pulley 46 is clamp fitted to the one end portion of the both end portions of the rotator 43 that is on the opposite side from the other end portion to which the wire-wound member 40 is attached, such that the support pillar 44 is positioned between the both end portions. In addition, the support pillar 44 is provided with a motor 47 serving as rotating means for rotating the rotator 43. The motor 47 is provided on the support pillar 44 such that a rotation axis 47a extends in parallel with the rotation center of the rotator 43, and a pulley 48 is provided on the rotation axis 47a of the motor 47. Here, the motor 47 may not be provided on the support pillar 44, but may be provided on the mounting 50a.

A belt 45 is suspended over the pulley 46 of the rotator 43 and the pulley 48 of the rotation axis 47a of the motor 47. With such a configuration, as the motor 47 is driven, the rotator 43 is rotationally driven via the belt 45. By fitting the wire-wound member 40 into the rotator 43, the wire-wound member 40 is rotated together with the rotator 43.

By rotating the wire-wound member 40 together with the rotator 43 by the motor 47, the electrical conductor wire 8 delivered from the wire rod nozzle 71 is wound around the winding body portion 41 of the wire-wound member 40.

In addition, the wire winding device 50 is provided with a locking part 75 that locks the electrical conductor wire 8 that has passed through the wire rod nozzle 71 and a locking part moving means 76 that moves the locking part 75. The locking part 75 has a wire-rod holding device 75c that can hold the electrical conductor wire 8 with a pair of clamping pieces 75a and 75b that are opened/closed by a fluid pressure and a motor 75d that rotates the wire-rod holding device 75c. The locking part moving means 76 has a configuration that can move the locking part 75 in the three axial directions.

The locking part moving means 76 has the configuration similar to that of the above-described nozzle moving means 66, and in order to make the locking part 75 movable in the Y axis direction, the locking part 75 is attached to a housing 78d of a Y-axis direction expansion/contraction actuator 78. In addition, in order to make the locking part 75 movable together with the Y-axis direction expansion/contraction actuator 78 in the Z axis direction, a follower 78c of the Y-axis direction expansion/contraction actuator 78 is attached to a follower 79c of a Z-axis direction expansion/contraction actuator 79. In addition, in order to make the locking part 75 movable together with the Y-axis and Z-axis direction expansion/contraction actuators 78 and 79 in the X axis direction, a housing 79d of the Z-axis direction expansion/contraction actuator 79 is attached to a follower 77c of a X-axis direction expansion/contraction actuator 77. A housing 77d of the X-axis direction expansion/contraction actuator 77 is fixed to the mounting 50a so as to be aligned along the X axis direction.

Respective servomotors 77a to 79a of the respective expansion/contraction actuators 77 to 79 are connected to the controller (not shown) for controlling them. As the servomotors 77a to 79a are driven and ball screws 77b to 79b are rotated in accordance with instructions from the controller, the followers 77c to 79c screwed to the ball screws 77b to 79b are moved along the longitudinal directions of the housing 77d to 79d. By the action of the respective expansion/contraction actuators 77 to 79 described above, the locking part 75 can be moved in the three axial directions.

The electrical conductor wire 8 extending out from a tip end of the wire rod nozzle 71 is placed between the pair of clamping pieces 75a and 75b, and thereafter, the pair of clamping pieces 75a and 75b are closed to establish a state in which the electrical conductor wire 8 is held by the locking part 75. The locking part 75 holding the electrical conductor wire 8 is moved by the locking part moving means 76 in the three axial directions.

Next, a winding method of the electrical conductor wire will be described.

The winding method of the electrical conductor wire 8 has: a winding-head stripping step in which a winding-head stripped portion 8a is formed by stripping, for a predetermined length, the insulating layer of the electrical conductor wire 8 the downstream end of which is locked to the locking part 75 by moving the cutters 14 pressed against a periphery of the electrical conductor wire 8 towards the downstream end side of the electrical conductor wire 8; a winding-head anchoring step in which the winding-head stripped portion 8a is anchored to a winding-head connector portion 42a of the wire-wound member 40; a winding-head cutting step in which the electrical conductor wire 8 extending between the winding-head connector portion 42a and the locking part 75 is cut at the vicinity of the winding-head connector portion 42a; a wire winding step in which the electrical conductor wire 8 following the winding-head stripped portion 8a is wound around the wire-wound member 40; a winding-tail stripping step in which a winding-tail stripped portion 8b is formed by stripping, for a predetermined length, the insulating layer of the electrical conductor wire 8 in a winding-tail part by moving the cutters 24 pressed against the periphery of the electrical conductor wire 8 towards the upstream end side of the electrical conductor wire 8; a winding-tail anchoring step in which the winding-tail stripped portion 8b is locked to a winding-tail connector portion 42b of the wire-wound member 40; a temporary locking step in which the electrical conductor wire 8 extending on the upstream end side relative to the winding-tail connector portion 42b is locked to the locking part 75; and a winding-tail cutting step in which the electrical conductor wire 8 extending between the winding-tail connector portion 42b and the locking part 75 is cut at the vicinity of the winding-tail connector portion 42b.

When the wire winding device 50 having the above-described configuration is to be used, a preparation step is first performed before the winding-head stripping step. In the preparation step, the wire-wound member 40 is fitted into the rotator 43 of the wire winding device 50 and the electrical conductor wire 8 is installed to the wire winding device 50.

When the electrical conductor wire 8 is to be installed, the electrical conductor wire 8 that is stored by being wound around the spool 52 is prepared. As shown in FIG. 6, the spool 52 is attached to the side surface of the casing 54 of the tension device 53 so as to be ready to be rotatable by the delivery control motor 57. The electrical conductor wire 8 unwound from the spool 52 is then guided to the guide pulley 58 provided on the tip end of the tension bar 56, and further, guided to the stripping device 10 by passing through the upstream-end-side nozzle 70.

The electrical conductor wire 8 that has been guided to the stripping device 10 is inserted into both of the rotating members 12 and 22 of the downstream-end side stripper 11 and the upstream-end side stripper 21, and the electrical conductor wire 8 that has passed through the rotating members 12 and 22 is further inserted into the wire rod nozzle 71.

As shown in FIG. 5, a state in which the downstream end of the electrical conductor wire 8 delivered from the wire rod nozzle 71 is clamped by the locking part 75 provided on the mounting 50a so that the electrical conductor wire 8 does not move, in other words, the electrical conductor wire 8 is not pulled back even if the electrical conductor wire 8 is pulled by the tension device 53 is established. In this state, the winding-head stripping step is performed.

In the winding-head stripping step, the winding-head stripped portion 8a is formed by stripping, for a predetermined length, the insulating layer of the electrical conductor wire 8 the downstream end of which is locked to the locking part 75 by the downstream-end side stripper 11 of the stripping device 10 by moving the cutters 14 pressed against the periphery of the electrical conductor wire 8 towards the downstream end side of the electrical conductor wire 8.

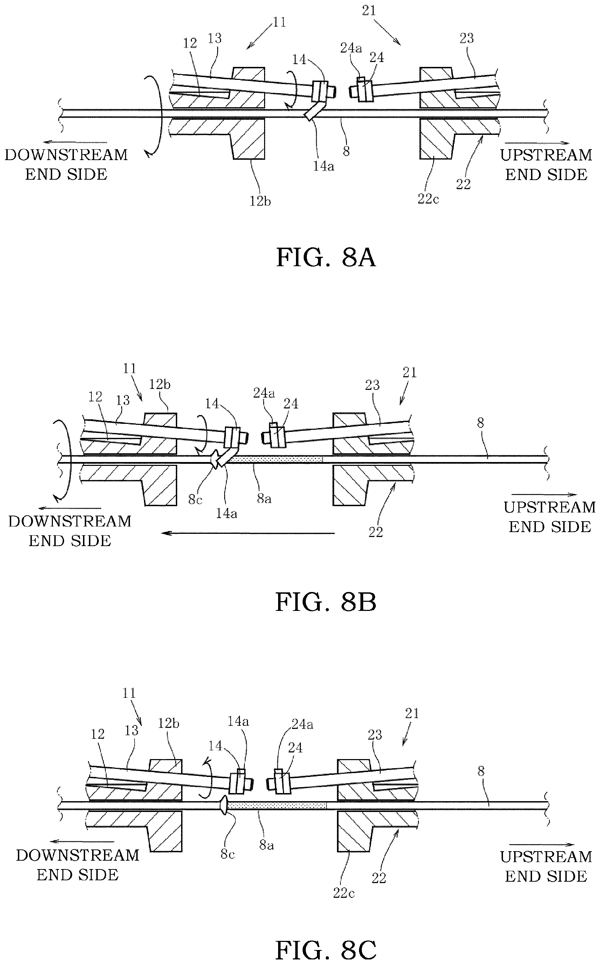

Specifically, when the stripping of the insulating layer is required, the controller drives the motor 17 of the downstream-end side stripper 11 to rotate the rotating member 12 at the rotation speed in accordance with the wire diameter of the electrical conductor wire 8, as shown by solid line arrows in FIG. 8A. As the rotating member 12 is rotated, the cutters 14, the cutter shafts 13, and the weights 15 that are attached to the rotating member 12 via the flanges 12a and 12b are also revolved around the periphery of the electrical conductor wire 8.

The respective weights 15 are respectively swiveled radially outward against the biasing force exerted by the flat springs 18 about the axes of the respective cutter shafts 13 as the centers by the centrifugal force corresponding to the rotation speed of the rotating member 12 (see FIG. 3). As a result, a state in which the cutter shafts 13 are rotated, and the blade portions 14a of the respective cutters 14 are brought into contact with the electrical conductor wire 8 and pressed against the electrical conductor wire 8 is established.

As described above, at the state in which the blade portions 14a are pressed against the electrical conductor wire 8 and are revolving around the periphery of the electrical conductor wire 8, the downstream-end side stripper 11 is moved towards the downstream end side of the electrical conductor wire 8 by a required length, as shown in FIG. 8B. This movement is achieved by the stripper moving means 31. Because the downstream-end side stripper 11 moves while the blade portions 14a of the cutters 14 are brought into contact with the side surface of the electrical conductor wire 8 inserted into the rotating member 12, the insulating layer of the electrical conductor wire 8 is stripped by the blade portions 14a of the cutters 14 in contact with the electrical conductor wire 8.

When the stripping of the insulating layer for the predetermined length is completed, the movement of the downstream-end side stripper 11 by the stripper moving means 31 is stopped, and at the same time, the rotation of the rotating member 12 by the motor 17 is also stopped. As the rotation of the rotating member 12 is stopped, as shown in FIG. 2, the weights 15 are returned to initial positions by the biasing force exerted by the flat springs 18, and the blade portions 14a of the cutters 14 are also returned to the initial positions separated away from the electrical conductor wire 8. As a result, the stripping of the insulating layer by the downstream-end side stripper 11 is stopped.

Here, as shown in FIG. 8B, the insulating layer that has been stripped is tightly adhered to the cutters 14 and moves towards the downstream end side of the electrical conductor wire 8 together with the cutters 14. Therefore, as shown in FIG. 8C, at a stripping-finish part, which is a part where the blade portions 14a of the cutters 14 are separated away from the electrical conductor wire 8, a part of the stripped insulating layer that has moved together with the cutters 14 remains on the surface of the electrical conductor wire 8 and becomes a winding-head stripping 8c. Because the downstream-end side stripper 11 strips the insulating layer by the cutters 14 while moving towards the downstream end side of the electrical conductor wire 8, the winding-head stripping 8c that is formed while the stripping by the downstream-end side stripper 11 is formed on the downstream end side of the winding-head stripped portion 8a.

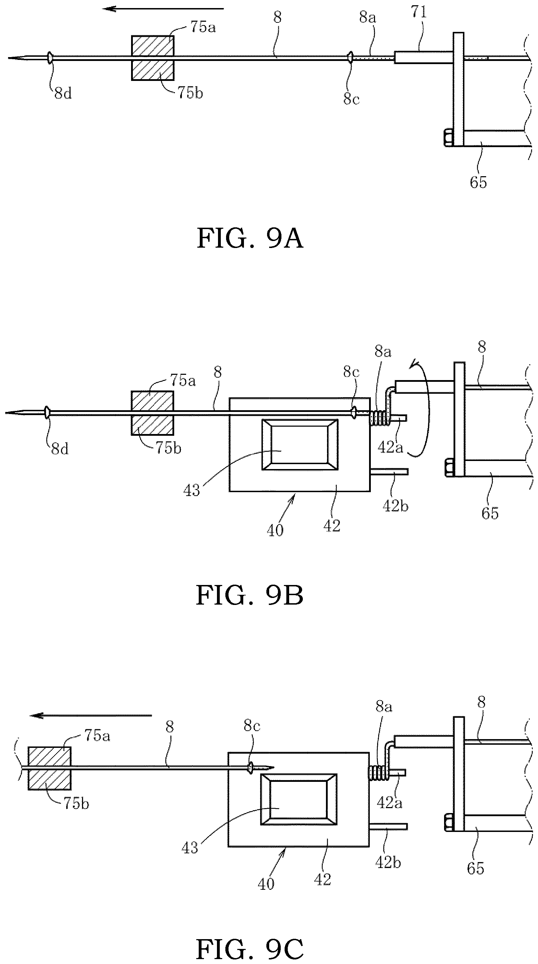

Next, the winding-head anchoring step is performed. In the winding-head anchoring step, as shown in FIG. 9B, the winding-head stripped portion 8a that has been formed by stripping the insulating layer is anchored to the winding-head connector portion 42a of the wire-wound member 40. As described above, because the wire-wound member 40 is provided with the pair of pins 42a and 42b respectively forming the winding-head connector portion and the winding-tail connector portion, the wire winding device 50 moves the wire rod nozzle 71 together with the support plate 65 by the nozzle moving means 66 and causes the wire rod nozzle 71 to be revolved about the first pin 42a, as the center, forming the winding-head connector portion (see FIG. 9B). By doing so, the winding-head stripped portion 8a delivered from the wire rod nozzle 71 is tangled around the pin 42a.

At the time when the winding-head stripping step is finished, the winding-head stripped portion 8a is still not delivered from the wire rod nozzle 71. Thus, as shown in FIG. 9A, the locking part 75 to which the downstream end of the electrical conductor wire 8 is locked is moved away from the wire rod nozzle 71 by the locking part moving means 76, and the winding-head stripped portion 8a is delivered from the wire rod nozzle 71, and thereafter, the winding-head stripped portion 8a is caused to be tangled around the pin 42a. A reference numeral 8d shown in FIGs. 9a and 9b shows a winding-tail stripping 8d that has been formed during a preceding wire winding process.

As shown in FIG. 9B, by revolving the wire rod nozzle 71 about the first pin 42a as the center, the winding-head stripped portion 8a is tangled around the pin 42a. However, the winding-head stripping 8c formed in the winding-head stripping step is still formed at the downstream end side of the winding-head stripped portion 8a. In other words, the winding-head anchoring step is completed in a state in which the winding-head stripping 8c formed in the winding-head stripping step is positioned between the locking part 75 and the first pin 42a that is the winding-head connector portion.

Next, the winding-head cutting step is performed. As shown in FIG. 9C, in the winding-head cutting step, the electrical conductor wire 8 extending from the winding-head connector portion 42a, which is the one of the pins, to which the winding-head stripped portion 8a is tangled and anchored to the locking part 75 is cut at the vicinity of the winding-head connector portion 42a.

Specifically, the locking part 75, to which the downstream end of the electrical conductor wire 8 is locked, is moved by using the locking part moving means 76 for moving the locking part 75 so as to move away from the winding-head connector portion 42a, and thereby, the electrical conductor wire 8 is cut by being teared off at the vicinity of the winding-head connector portion 42a.

As described above, in the winding-head cutting step, because the electrical conductor wire 8 is cut at the vicinity of the winding-head connector portion 42a, the winding-head stripping 8c remains on the side of the electrical conductor wire 8 that is locked to the locking part 75, and therefore, the winding-head stripping 8c is prevented from being remained in the winding-head stripped portion 8a of the electrical conductor wire 8 that is tangled around the connector portion 42a of the wire-wound member 40.

In the above, the electrical conductor wire 8 having the remaining winding-head stripping 8c is subsequently removed from the locking part 75 and disposed.

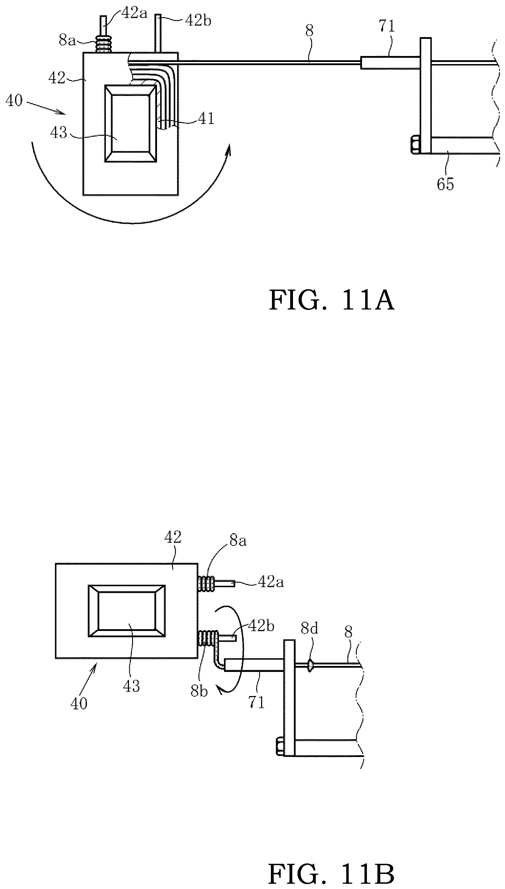

As the winding-head cutting step is finished, the wire winding step is performed next. As shown in FIG. 11A, in the wire winding step, the electrical conductor wire 8 that follows the winding-head stripped portion 8a on the wire rod nozzle 71 side is wound around the wire-wound member 40. Specifically, the wire winding step is performed by rotating the rotator 43 together with the wire-wound member 40 by the motor 47 that is the rotating means by a required times.

In addition, during this step, the wire rod nozzle 71 is moved by the nozzle moving means 66 so as to reciprocate between the pair of flanges 42 of the wire-wound member 40, in other words, so as to reciprocate along the Y axis direction, and thereby, the electrical conductor wire 8 successively delivered from the wire rod nozzle 71 is also wound around the winding body portion 41 in a regular manner.

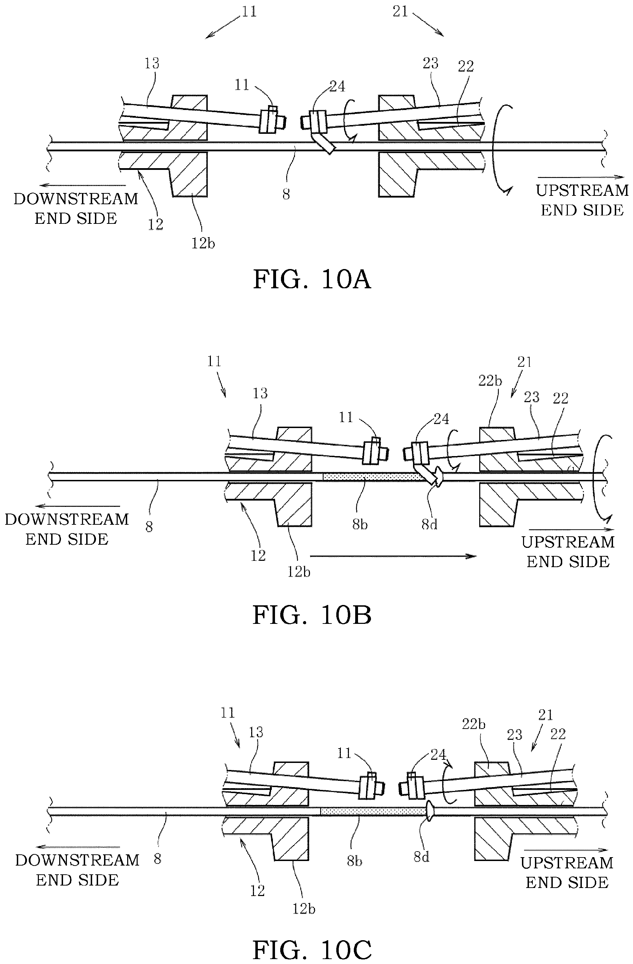

When the wire winding step is finished, subsequently, the winding-tail stripping step is performed. As shown in FIGs. 10A to 10C, in the winding-tail stripping step, the winding-tail stripped portion 8b is formed by stripping, for a predetermined length, the insulating layer of the electrical conductor wire 8 in the winding-tail part by the upstream-end side stripper 21 of the stripping device 10 by moving the cutters 24 pressed against the periphery of the electrical conductor wire 8 towards the upstream end side of the electrical conductor wire 8 on the opposite side relative to the downstream end side.

In a state in which the electrical conductor wire 8 successively delivered from the wire rod nozzle 71 is wound around the wire-wound member 40 for a predetermined amount in the wire winding step, when the stripping of the insulating layer at a part corresponding to the winding-tail part is required, the controller drives a motor 27 of the upstream-end side stripper 21 to rotate the rotating member 22 at the rotation speed in accordance with the wire diameter of the electrical conductor wire 8, as shown by solid line arrows in FIG. 10A. As the rotating member 22 is rotated, the cutters 24, the cutter shafts 23 and weights 25 each serving as a second weight are also revolved around the periphery of the electrical conductor wire 8. The weights 25 are respectively swiveled radially outward about the cutter shafts 23 as the axis by the centrifugal force corresponding to the rotation speed of the rotating member 22. As a result, the respective cutter shafts 23 are rotated, and as shown in FIG. 10A, respective blade portions 24a of the cutters 24 are brought into contact with and caused to be pressed against the electrical conductor wire 8.

As described above, at the state in which the blade portions 24a are pressed against the electrical conductor wire 8 and are revolving around the periphery of the electrical conductor wire 8, the upstream-end side stripper 21 is moved towards the upstream end side of the electrical conductor wire 8 by a required length, as shown in FIG. 10B. This movement is achieved by the stripper moving means 31. Because the upstream-end side stripper 21 moves while the blade portions 24a of the cutters 24 are brought into contact with the side surface of the electrical conductor wire 8 inserted into the rotating member 22, the insulating layer of the electrical conductor wire 8 is stripped by the blade portions 24a of the cutters 24 in contact with the electrical conductor wire 8.

When the stripping of the insulating layer for the predetermined length is completed, as shown in FIG. 10C, the movement of the upstream-end side stripper 21 by the stripper moving means 31 is stopped, and at the same time, the rotation of the rotating member 22 by the motor 27 is also stopped. As the rotation of the rotating member 22 is stopped, the weights 25 are returned to initial positions by the biasing force exerted by a flat spring 28, and the blade portions 24a of the cutters 24 are also returned to initial positions separated away from the electrical conductor wire 8. As a result, the stripping of the insulating layer by the upstream-end side stripper 21 is stopped.

Here, as shown in FIG. 10B, the insulating layer that has been stripped is tightly adhered to the cutters 24 and moves towards the upstream end side of the electrical conductor wire 8 together with the cutters 24. Therefore, as shown in FIG. 10C, at the stripping-finish part, which is a part where the blade portions 24a of the cutters 24 are separated away from the electrical conductor wire 8, a part of the stripped insulating layer that has moved together with the cutters 24 remains on the surface of the electrical conductor wire 8 and becomes the winding-tail stripping 8d. Because the upstream-end side stripper 21 strips the insulating layer by the cutters 24 while moving towards the upstream end side of the electrical conductor wire 8, the winding-tail stripping 8d that is formed while the stripping by the upstream-end side stripper 21 is formed on the upstream end side of the winding-tail stripped portion 8b.

As described above, with the stripping device 10, as described in the winding-head stripping step, it is possible to form the stripping 8c on the downstream end side of the stripped portion 8a, and at the same time, as described in the winding-tail stripping step, it is also possible to form the stripping 8d on the upstream end side of the stripped portion 8b. Therefore, by using the stripping device 10 having the above-described configuration, it is possible to arbitrarily change the side at which the strippings 8c and 8d are to be formed to the downstream end side or the upstream end side.

When the winding-tail stripping step is finished, subsequently, the winding-tail anchoring step in which the winding-tail stripped portion 8b formed by stripping the insulating layer is anchored to the winding-tail connector portion 42b of the wire-wound member 40 is performed.

At the time when the winding-tail stripping step is finished, the winding-tail stripped portion 8b is still not delivered from the wire rod nozzle 71. Thus, until the winding-tail stripped portion 8b is delivered from the wire rod nozzle 71, as shown in FIG. 11A, the wire-wound member 40 is rotated together with the rotator 43 to wind the electrical conductor wire 8 delivered from the wire rod nozzle 71 around the wire-wound member 40. Then, the winding-tail stripped portion 8b is delivered from the wire rod nozzle 71 such that the winding-tail stripped portion 8b can be tangled around the second pin 42b forming the winding-tail connector portion.

As shown in FIG. 11B, the wire winding device 50 then moves the wire rod nozzle 71 together with the support plate 65 by the nozzle moving means 66 and revolves the wire rod nozzle 71 about the second pin 42b, as the center, forming the winding-tail connector portion. By doing so, the winding-tail stripped portion 8b delivered from the wire rod nozzle 71 is tangled around the pin 42b.

As described above, the winding-tail stripped portion 8b is tangled around the second pin 42b. However, the winding-tail stripping 8d formed in the winding-tail stripping step is still formed at the upstream end side of the winding-tail stripped portion 8b. In other words, the winding-tail anchoring step is completed in a state in which the winding-tail stripping 8d formed in the winding-tail stripping step is positioned on the upstream end side relative to the second pin 42b that is the winding-tail connector portion.

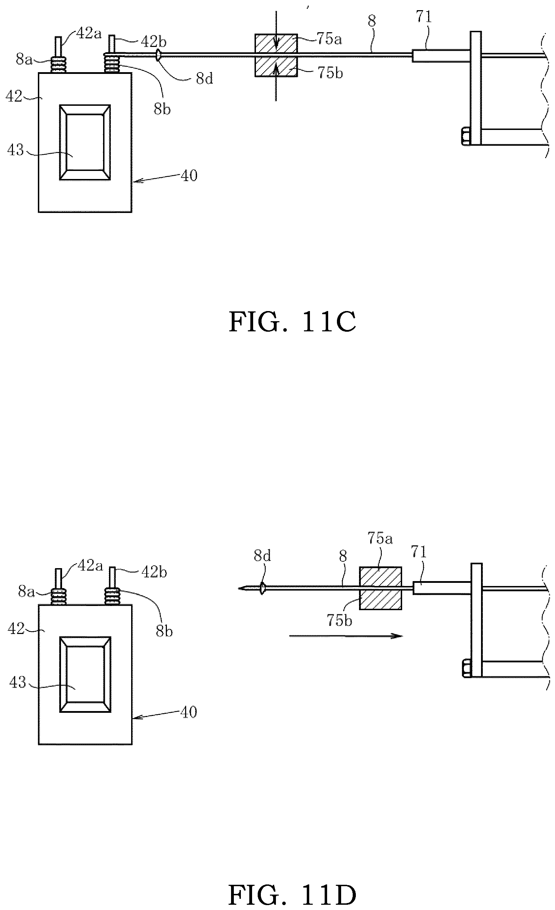

Subsequently, the temporary locking step is performed. In the temporary locking step, as shown in FIG. 11C, the electrical conductor wire 8 extending on the upstream end side relative to the winding-tail connector portion 42b is locked by the locking part 75 at between the part where the winding-tail stripping 8d is remaining and the wire rod nozzle 71. Therefore, because it is required to ensure a space sufficiently large enough to allow the locking part 75 to enter therein between the winding-tail stripping 8d and the wire rod nozzle 71, the wire rod nozzle 71 is moved away from the winding-tail stripped portion 8b before the temporary locking step is performed.

In the temporary locking step, the locking part 75 is first moved by the locking part moving means 76 such that the electrical conductor wire 8 extending out from the tip end of the wire rod nozzle 71 is positioned between the opened pair of clamping pieces 75a and 75b. Thereafter, by closing the pair of clamping pieces 75a and 75b, as shown in FIG. 11C, a state in which the electrical conductor wire 8 is held by the pair of clamping pieces 75a and 75b is established. FIG. 11C shows a state in which the electrical conductor wire 8 is locked by the locking part 75 between the winding-tail stripping 8d pulled out from the wire rod nozzle 71 and the wire rod nozzle 71.

Next, the winding-tail cutting step is performed. In the winding-tail cutting step, the electrical conductor wire 8 extending to the locking part 75 from the winding-tail connector portion 42b that is the second pin 42b around which the winding-tail stripped portion 8b is tangled and anchored is cut at the vicinity of the winding-tail connector portion 42b.

Specifically, as shown in FIG. 11D, the locking part moving means 76 for moving the locking part 75 is used to move the locking part 75, which locks the electrical conductor wire 8, away from the winding-tail connector portion 42b, and thereby, the electrical conductor wire 8 is cut by being teared off at the vicinity of the winding-tail connector portion 42b.

As described above, in the winding-tail cutting step, because the electrical conductor wire 8 is cut at the vicinity of the winding-tail connector portion 42b, the winding-tail stripping 8d remains on the side of the electrical conductor wire 8 that is locked to the locking part 75, and therefore, the winding-tail stripping 8d is prevented from being remained in the winding-tail stripped portion 8b of the electrical conductor wire 8 that is tangled around the connector portion 42b of the wire-wound member 40.

As the winding-tail cutting step is completed, a series of wire winding operations for the wire-wound member 40 is finished, and the wire-wound member 40 on which a coil has been formed is removed from the rotator 43. By installing another new wire-wound member 40 to the rotator 43, next wire winding operation is started.

As described above, with the winding method using the wire winding device 50 having the above-described configuration, it is possible to avoid a situation in which the strippings 8c and 8d remain on the stripped portions 8a and 8b of the electrical conductor wire 8 connected to the connector portions 42a and 42b of the wire-wound member 40, and it is possible to improve electrical conductivity of the stripped portions 8a and 8b of the electrical conductor wire 8.

In the above-described embodiment, the locking part moving means 76 and the nozzle moving means 66 are configured by combining the X-axis, Y-axis, and Z-axis direction expansion/contraction actuators. The configurations of the locking part moving means 76 and the nozzle moving means 66 are not limited thereto, and they may be of any type as long as the locking part 75, the wire rod nozzle 71, and so forth can be moved in the three axial directions with respect to the mounting 50a.

In addition, in the above-described embodiment, the tension device 53 applies the tension to the electrical conductor wire 8 by tilting the tension bar 56 by the biasing force exerted by the spring 61. The means for applying the tension to the electrical conductor wire 8 is not limited thereto, and for example, it may be of any type in which the tension is applied to the electrical conductor wire 8 by controlling the rotation of the spool 52 by the control motor 57 to appropriately control a delivery speed.

In addition, in the above-described embodiment, the downstream-end side stripper 11 and the upstream-end side stripper 21 are arranged adjacent to each other on the square-shaped base plate 30 such that the sides on the cutters 14 and 24 provided on the front ends of the cutter shafts 13 and 23 face with each other. Instead of this configuration, the downstream-end side stripper 11 and the upstream-end side stripper 21 may be arranged such that the sides on the weights 15 and 25 provided on the rear ends of the cutter shafts 13 and 23 face with each other.

In addition, in the above-described embodiment, the stripper moving means 31 moves both of the downstream-end side stripper 11 and the upstream-end side stripper 21, at the same time, along the longitudinal direction of the electrical conductor wire 8. Instead of this configuration, the stripper moving means 31 may be provided separately for the respective strippers 11 and 12 so as to move either one of the downstream-end side stripper 11 and the upstream-end side stripper 21, and in this case, only the stripper 11 or 12 stripping the insulating layer is moved by the stripper moving means 31. In addition, for example, as long as the insulating layer of the electrical conductor wire 8 can be stripped by moving the stripping device 10 along the X axis direction by the X-axis direction expansion/contraction actuator 67 of the nozzle moving means 66, it may be possible to employ a configuration in which the nozzle moving means 66 also serves as the stripper moving means 31.

In addition, in the above-described embodiment, the winding-head connector portion and the winding-tail connector portion are configured by a pair of pins 42a and 42b provided on one of the flanges 42 of the wire-wound member 40. Instead of this configuration, the connector portion may not be formed by tangling the winding-head stripped portion 8a and the winding-tail stripped portion 8b around the pins, but may be formed by drawing out the winding-head stripped portion 8a and the winding-tail stripped portion 8b as the lead wire from the electrical conductor wire 8 wound around the winding body portion 41 of the wire-wound member 40. In this case, the cutting of the electrical conductor wire 8 is achieved not by the tearing, but achieved by the use of a cutter, etc.

In addition, in the above-described embodiment, the locking part 75 is formed of the wire-rod holding device 75c, etc. that is capable of clamping the electrical conductor wire 8 with the pair of clamping pieces 75a and 75b that are opened/closed by the fluid pressure. The locking part 75 is not limited to the above-described configuration and may have any configuration as long as it can lock the electrical conductor wire 8, and for example, the locking part 75 may be a bar member with which a state where the electrical conductor wire 8 is locked is achieved by winding the electrical conductor wire 8 around it.

In addition, in the above-described embodiment, the locking part moving means 76 for moving the locking part 75 is used as a cutting device of the electrical conductor wire 8. The cutting device for cutting the electrical conductor wire 8 is not limited thereto, and the cutting device may have any configuration as long as it can cut the electrical conductor wire 8, and for example, a cutter, etc. capable of directly cutting the electrical conductor wire 8 may be used as the cutting device.

This application claims priority based on Japanese Patent Application No. 2020-039627 filed with the Japan Patent Office on March 9, 2020, the entire contents of which are incorporated into this specification by reference.

## Claims

1. An electrical-conductor-wire insulating-layer stripping device configured to strip an insulating layer of an electrical conductor wire, the electrical-conductor-wire insulating-layer stripping device comprising:
a first stripper configured to strip the insulating layer of the electrical conductor wire by moving a first cutter towards a downstream end side of the electrical conductor wire, the first cutter being pressed against a periphery of the electrical conductor wire;
a second stripper provided adjacent to the first stripper, the second stripper being configured to strip the insulating layer of the electrical conductor wire by moving a second cutter towards a upstream end side of the electrical conductor wire, and the second cutter being pressed against the periphery of the electrical conductor wire; and
a stripper moving means configured to move either one or both of the first and second strippers along a longitudinal direction of the electrical conductor wire.

2. The electrical-conductor-wire insulating-layer stripping device according to claim 1, wherein
the first stripper is provided with:
a first rotating member provided so as to be rotatable about the electrical conductor wire;
a first cutter shaft supported by the first rotating member so as to be rotatable, the first cutter shaft being provided with the first cutter on a front end of the first cutter shaft; and
a first weight provided on a rear end of the first cutter shaft,
a plurality of the first cutter shafts are arranged at equal intervals in a circumferential direction of the first rotating member, the first cutter shafts being provided so as to be inclined with respect to the electrical conductor wire such that the front end side is positioned closer to the electrical conductor wire relative to the rear end side,
the first weight is provided such that a center of gravity is decentered with respect to an axial center of the first cutter shaft in order to rotate the first cutter shaft in response to a centrifugal force generated by rotation of the first rotating member,
the second stripper is provided with:
a second rotating member provided so as to be rotatable about the electrical conductor wire;
a second cutter shaft supported by the second rotating member so as to be rotatable, the second cutter shaft being provided with the second cutter on a front end of the second cutter shaft; and
a second weight provided on a rear end of the second cutter shaft,
a plurality of the second cutter shafts are arranged at equal intervals in a circumferential direction of the second rotating member, the second cutter shafts being provided so as to be inclined with respect to the electrical conductor wire such that the front end side is positioned closer to the electrical conductor wire relative to the rear end side,
the second weight is provided such that a center of gravity is decentered with respect to an axial center of the second cutter shaft in order to rotate the second cutter shaft in response to a centrifugal force generated by rotation of the second rotating member, and
the first and the second strippers are provided adjacent to each other such that the first cutter and the second cutter face each other, or such that the first weight and the second weight face each other.

3. A wire winding device comprising:
the electrical-conductor-wire insulating-layer stripping device according to claim 1 or 2;
a wire-rod delivering means configured to deliver the electrical conductor wire to the electrical-conductor-wire insulating-layer stripping device at a predetermined tension; and
a wire winding means configured to wind the electrical conductor wire that has passed the electrical-conductor-wire insulating-layer stripping device around the wire-wound member.

4. The wire winding device according to claim 3, further comprising:
a locking part configured to lock the electrical conductor wire that has passed the electrical-conductor-wire insulating-layer stripping device; and
a cutting device configured to cut the electrical conductor wire.

5. The wire winding device according to claim 4, wherein
the cutting device is a locking part moving means configured to move the locking part to which the electrical conductor wire is locked.

6. The wire winding device according to any one of claims 3 to 5, wherein
the wire winding means has: a nozzle through which the electrical conductor wire can be inserted, the electrical conductor wire having passed through the electrical-conductor-wire insulating-layer stripping device; and a nozzle moving means configured to move the nozzle, and
the nozzle moving means also serves as the stripper moving means.

7. An electrical-conductor-wire winding method for winding an electrical conductor wire around a wire-wound member, the electrical-conductor-wire winding method comprising:
a winding-head stripping step of forming a winding-head stripped portion by stripping an insulating layer of the electrical conductor wire by moving a first cutter towards a downstream end side of the electrical conductor wire, the insulating layer being stripped for a predetermined length, a downstream end of the electrical conductor wire being locked to a locking part, and the first cutter being pressed against a periphery of the electrical conductor wire;
a winding-head anchoring step of anchoring the winding-head stripped portion around a winding-head connector portion of the wire-wound member;
a winding-head cutting step of cutting the electrical conductor wire extending between the winding-head connector portion and the locking part, the electrical conductor wire being cut at a vicinity of the winding-head connector portion;
a wire winding step of winding the electrical conductor wire following the winding-head stripped portion around the wire-wound member;
a winding-tail stripping step of forming a winding-tail stripped portion by stripping the insulating layer of the electrical conductor wire in a winding-tail part by moving a second cutter towards a upstream end side of the electrical conductor wire, the insulating layer being stripped for a predetermined length, and the second cutter being pressed against the periphery of the electrical conductor wire;
a winding-tail anchoring step of anchoring the winding-tail stripped portion around a winding-tail connector portion of the wire-wound member;
a temporary locking step of locking the electrical conductor wire to the locking part, the electrical conductor extending towards the upstream end side of the winding-tail connector portion; and
a winding-tail cutting step of cutting the electrical conductor wire extending between the winding-tail connector portion and the locking part, the electrical conductor wire being cut at a vicinity of the winding-tail connector portion.

8. The electrical-conductor-wire winding method according to claim 7, wherein
in the winding-head anchoring step, the anchoring of the winding-head stripped portion to the winding-head connector portion of the wire-wound member is completed in a state in which a stripping-finish part of the winding-head stripped portion is positioned between the locking part and the winding-head connector portion, and
in the winding-tail anchoring step, the anchoring of the winding-tail stripped portion to the winding-tail connector portion of the wire-wound member is completed in a state in which a stripping-finish part of the winding-tail stripped portion is positioned on the upstream end side of the winding-tail connector portion.
